# EUROPÄISCHE PATENTSCHRIFT

(11) **EP 4 417 712 B1**
(45) Veröffentlichungstag und Bekanntmachung des Hinweises auf die Patenterteilung: **01.07.2026**
(21) Anmeldenummer: 21960321.4
(22) Anmeldetag: 15.10.2021
(51) Int. Cl.: C21C 5/46, F16C 29/00, F16C 13/00, F16C 27/04, F16C 35/04

(54) **LAGERSITZANORDNUNG UND WANDLERVORRICHTUNG**
BEARING SEAT ASSEMBLY AND CONVERTER DEVICE
ENSEMBLE DE SIÈGE DE PALIER ET DISPOSITIF CONVERTISSEUR

(43) Veröffentlichungstag der Anmeldung: 21.08.2024
(73) Patentinhaber: Schaeffler Technologies AG & Co. KG, 91074 Herzogenaurach (DE)
(72) Erfinder: ZIMMERMANN, Klaus, 97723 (DE); WEIPPERT, Philipp, 97337 (DE); HAN, Huimin, Taicang, Jiangsu 215400 (CN)
(74) Vertreter: Schaeffler Technologies
(86) Internationale Anmeldenummer: PCT/CN2021/124205
(87) Internationale Veröffentlichungsnummer: WO 2023/060591

(56) Entgegenhaltungen:
- CA-A- 728 039
- CN-U- 201 801 542
- US-A- 3 170 737
- US-A- 3 291 541
- US-A- 3 291 542
- US-A- 3 523 714
- US-A- 3 887 248
- US-A- 3 901 566
- US-A- 4 080 014

## Beschreibung

### Technisches Gebiet

Die vorliegende Anmeldung bezieht sich auf das Gebiet der Lagersitze und insbesondere auf eine Lagersitzanordnung für eine Konvertervorrichtung in einem Stahlwerk, wobei die Konvertervorrichtung die Lagersitzanordnung umfasst. Eine gattungsgemäße Lagersitzanordnung ist aus US 3 291 542 A bekannt.

### Hintergrund

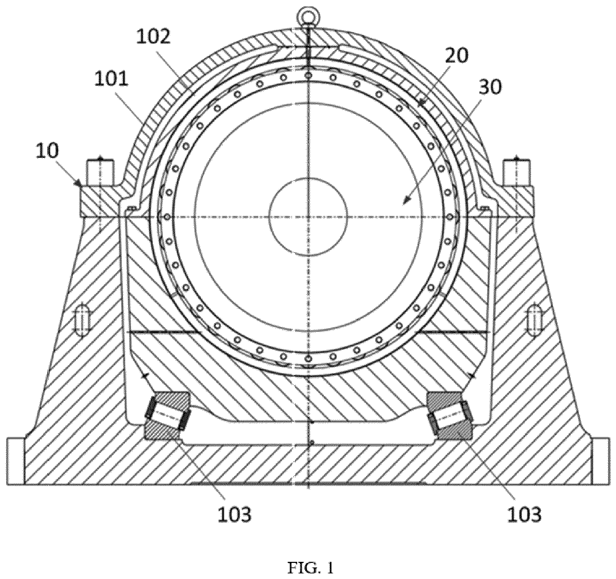

In einem Teilaufbau einer in FIG. 1 dargestellten Konvertervorrichtung, die ein Radiallager 20 auf sogenannte schwimmende Weise lagert, umfasst eine Lagersitzanordnung 10 einen ersten Lagersitz 101, einen zweiten Lagersitz 102 und Linearlager 103. Der erste Lagersitz 101 dient als äußerer Lagersitz zur Lagerung des zweiten Lagersitzes 102 und der Linearlager 103. Der zweite Lagersitz 102 dient als innerer Lagersitz zur Montage des Radiallagers 20. Die Linearlager 103 sind zwischen dem ersten Lagersitz 101 und dem zweiten Lagersitz 102 angeordnet, sodass der zweite Lagersitz 102 eine lineare Bewegung relativ zum ersten Lagersitz 101 ausführen kann. Da die Linearlager 103 zwischen dem unteren Abschnitt des ersten Lagersitzes 101 und dem unteren Abschnitt des zweiten Lagersitzes 102 montiert sind, besteht außerdem ein großer Spalt zwischen dem unteren Abschnitt des ersten Lagersitzes 101 und dem unteren Abschnitt des zweiten Lagersitzes 102, sodass der untere Abschnitt des zweiten Lagersitzes 102 relativ zum unteren Abschnitt des ersten Lagersitzes 101 schwimmt. Auf diese Weise führt das im zweiten Lagersitz 102 montierte Radiallager 20 die sogenannte Schwimmfunktion aus. Um außerdem zu gewährleisten, dass sich die beiden Lagersitze 101 und 102 bei der Montage und im Einsatz der Lagersitzanordnung 10 nicht gegenseitig behindern, besteht zwischen allen außer den oberen Teilen der beiden Lagersitze 101 und 102 ein großer Spalt. Darüber hinaus ist eine Welle 30 in einer Lagerbohrung des Lagers 20 montiert, und das Lager 20 ist in einer Lagersitzbohrung des zweiten Lagersitzes 102 montiert.

Wenn jedoch der untere Abschnitt des ersten Lagersitzes 101 in der horizontalen Ebene montiert ist, trägt das Radiallager 20 beim Betrieb der Konvertervorrichtung manchmal eine große radiale Last in vertikaler und horizontaler Richtung, was sich weiter auf die Lagersitzanordnung 10 überträgt und die folgenden Probleme verursacht.

Einerseits kann die Lagersitzanordnung 10 unter großer radialer Belastung in vertikaler Richtung starke Vibrationen auslösen. Folglich wirkt sich die Belastungsverteilung in der Lagersitzanordnung 10 nachteilig auf die Struktur des zweiten (inneren) Lagersitzes 102 aus. Insbesondere konzentriert sich die Belastungsverteilung an der im Wesentlichen zentralen Position des unteren Abschnitts des zweiten Lagersitzes 102, und die Belastung ist hoch. Das wirkt sich erheblich nachteilig auf die Struktur des zweiten Lagersitzes 102 aus und kann somit den Bruch des zweiten Lagersitzes 102 auslösen.

Andererseits tendiert der zweite Lagersitz 102 bei großer radialer Belastung in horizontaler Richtung zur Neigung. Das führt zu einem hohen Ausfallrisiko zwei linker und rechter Linearlager 103, die zwischen den beiden Lagersitzen montiert sind. Aufgrund der Neigung des zweiten Lagersitzes 102 tragen die beiden Linearlager 103 ungleiche Belastungen. Das führt zur Überlastung eines der Linearlager 103, und Rollen der Linearlager 103 können in diesem Fall zusätzlich eine Kantenbelastung erzeugen. Kurz gesagt ist dann ein früher Ausfall der Linearlager 103 wahrscheinlich.

### Kurzdarstellung

Die vorliegende Anmeldung wurde im Hinblick auf die vorstehend beschriebenen Mängel des Standes der Technik erarbeitet. Eine Aufgabe der vorliegenden Anmeldung besteht darin, eine neuartige Lagersitzanordnung bereitzustellen, welche die Verteilung und die Höhe der Belastung eines inneren Lagersitzes in vertikaler Richtung optimiert und so die nachteilige Wirkung der Belastung auf den inneren Lagersitz verringert und die Wahrscheinlichkeit eines möglichen vorzeitigen Ausfalls von Linearlagern unter Belastung in horizontaler Richtung vermindert. Eine weitere Aufgabe der vorliegenden Anmeldung ist, eine Konvertervorrichtung bereitzustellen, welche die oben genannte Lagersitzanordnung umfasst.

Um die vorstehende Aufgabe der Erfindung zu erfüllen, werden in der vorliegenden Anmeldung die nachfolgenden technischen Lösungen angewandt.

Die vorliegende Anmeldung stellt eine Lagersitzanordnung bereit, die Folgendes umfasst:
einen ersten Lagersitz mit einem darin ausgebildeten Montageraum und einem ersten unteren Abschnitt;
einen zweiten, im Montageraum montierten Lagersitz, der einen ersten unteren Abschnitt aufweist; und
Linearlager, die im Montageraum montiert sind und sich zwischen dem ersten und dem zweiten unteren Abschnitt befinden. Die Linearlager tragen den zweiten Lagersitz, sodass der zweite und der erste untere Abschnitt in Höhenrichtung der Lagersitzanordnung beabstandet sind und der zweite Lagersitz eine lineare Bewegung relativ zum ersten Lagersitz ausführen kann.

Dabei ist der zweite untere Abschnitt wie folgt geformt: Ein konvexer Abschnitt steht zum ersten unteren Abschnitt hin vor und ist im mittleren Abschnitt des zweiten unteren Abschnitts in Breitenrichtung der Lagersitzanordnung ausgebildet. Eine vertiefte Form ist in Richtung vom ersten unteren Abschnitt weg vertieft und in einem Teil des zweiten unteren Abschnitts zwischen dem konvexen Abschnitt und beiden Endabschnitten des zweiten unteren Abschnitts in Breitenrichtung ausgebildet.

Außerdem ist gegenüber vom konvexen Abschnitt im ersten unteren Abschnitt ein konkaver Abschnitt ausgebildet, der eine Öffnung aufweist, die zum konvexen Abschnitt hin offen ist. Der konvexe Abschnitt ist durch die Öffnung in den konkaven Abschnitt eingefügt.

In einer optionalen Lösung umfasst der Umriss der vertieften Form im Querschnitt des zweiten Lagersitzes eine Kurve.

In einer weiteren optionalen Lösung sind im ersten unteren Abschnitt zwei Schulterabschnitte ausgebildet, die zum zweiten unteren Abschnitt hin vorstehen, und der konkave Abschnitt ist zwischen den beiden Schulterabschnitten ausgebildet.

In einer anderen optionalen Lösung sind zwei Linearlager an beiden Seiten des konvexen Abschnitts in Breitenrichtung angeordnet, um beide Endabschnitte des zweiten unteren Abschnitts in Breitenrichtung zu tragen.

In einer weiteren optionalen Lösung umfasst der erste Lagersitz einen ersten und einen zweiten Seitenwandabschnitt, die beide am ersten unteren Abschnitt befestigt und in Breitenrichtung beabstandet sind. Der zweite Lagersitz befindet sich zwischen dem ersten und dem zweiten Seitenwandabschnitt.

Außerdem umfasst die Lagersitzanordnung einen ersten und einen zweiten Stopper. Der erste Stopper ist zwischen dem zweiten Lagersitz und dem ersten Seitenwandabschnitt eingeklemmt und der zweite Stopper ist zwischen dem zweiten Lagersitz und dem zweiten Seitenwandabschnitt eingeklemmt.

In einer weiteren optionalen Lösung ist der erste Stopper abnehmbar am ersten Seitenwandabschnitt befestigt und der zweite Stopper ist abnehmbar am zweiten Seitenwandabschnitt befestigt.

In einer weiteren optionalen Lösung ist ein erster konkaver Montageabschnitt im ersten Seitenwandabschnitt ausgebildet und der erste Stopper befindet sich zumindest teilweise im ersten konkaven Montageabschnitt. Ein zweiter konkaver Montageabschnitt ist im zweiten Seitenwandabschnitt ausgebildet und der zweite Stopper befindet sich zumindest teilweise im zweiten konkaven Montageabschnitt.

In einer weiteren optionalen Lösung umfasst der erste Lagersitz außerdem einen ersten Abdeckabschnitt, der abnehmbar am ersten und zweiten Seitenwandabschnitt befestigt ist. Der erste Abdeckabschnitt, der erste untere Abschnitt und der erste und zweite Seitenwandabschnitt bilden auf geschlossene Weise den Montageraum.

In einer weiteren optionalen Lösung umfasst der zweite Lagersitz außerdem einen zweiten Abdeckabschnitt, der am zweiten unteren Abschnitt befestigt ist. Der zweite Abdeckabschnitt und der zweite untere Abschnitt bilden dazwischen auf geschlossene Weise eine Lagersitzbohrung zur Montage eines Radiallagers.

Die vorliegende Anmeldung stellt außerdem eine Konvertervorrichtung bereit, die ein Radiallager, eine Welle und die Lagersitzanordnung umfasst, wie in einer der vorstehenden technischen Lösungen beschrieben ist. Hierbei ist das Radiallager im zweiten Lagersitz montiert, der Außenring des Radiallagers ist am zweiten Lagersitz befestigt und die Welle ist in eine Lagerbohrung des Radiallagers eingefügt und am Innenring des Radiallagers befestigt.

Durch die Übernahme der vorstehenden technischen Lösungen stellt die vorliegende Anmeldung eine Lagersitzanordnung und eine Konvertervorrichtung bereit, welche die Lagersitzanordnung umfasst. Die Lagersitzanordnung umfasst einen ersten Lagersitz, einen zweiten Lagersitz und Linearlager. Der erste Lagersitz weist einen darin ausgebildeten Montageraum und einen ersten unteren Abschnitt auf. Der zweite Lagersitz ist im Montageraum montiert und weist einen zweiten unteren Abschnitt auf. Die Linearlager sind im Montageraum montiert und befinden sich zwischen dem ersten und dem zweiten unteren Abschnitt. Die Linearlager tragen den zweiten Lagersitz derart, dass der zweite und der erste untere Abschnitt in Höhenrichtung beabstandet sind, sodass der zweite Lagersitz eine lineare Bewegung relativ zum ersten Lagersitz ausführen kann. Da der zweite Lagersitz relativ zum ersten Lagersitz in Höhenrichtung schwimmt und eine lineare Relativbewegung ausführen kann, führt ein im zweiten Lagersitz montiertes Radiallager die sogenannte Schwimmfunktion aus. Darüber hinaus ist der zweite untere Abschnitt wie folgt geformt: Ein konvexer Abschnitt steht zum ersten unteren Abschnitt hin vor und ist im mittleren Abschnitt des zweiten unteren Abschnitts in Breitenrichtung ausgebildet. Eine vertiefte Form ist in Richtung vom ersten unteren Abschnitt weg vertieft und in einem Teil des zweiten unteren Abschnitts zwischen dem konvexen Abschnitt und beiden Endabschnitten in Breitenrichtung ausgebildet. Darüber hinaus ist gegenüber vom konvexen Abschnitt im ersten unteren Abschnitt ein konkaver Abschnitt ausgebildet, der eine Öffnung aufweist, die zum konvexen Abschnitt hin offen ist. Der konvexe Abschnitt wird durch die Öffnung in den konkaven Abschnitt eingefügt.

Auf diese Weise hat der mittlere Abschnitt des unteren Abschnitts des zweiten Lagersitzes eine Form, die in der Mitte konvex und auf beiden Seiten konkav ist. Tests zur Belastungsanalyse haben nachgewiesen, dass diese Struktur in der Lage ist, die Belastungsverteilung des zweiten Lagersitzes zu optimieren und so das Radiallager unter einer großen Last in vertikaler Richtung zu tragen. Damit verringert sich die Belastungskonzentration im unteren Abschnitt des zweiten Lagersitzes und die Belastung im unteren Abschnitt des zweiten Lagersitzes vermindert sich erheblich. So verringert sich die ungünstige Wirkung der Belastung auf die Struktur des zweiten Lagersitzes. Darüber hinaus ist im unteren Abschnitt des ersten Lagersitzes ein konkaver Abschnitt entsprechend dem konvexen Abschnitt des zweiten Lagersitzes ausgebildet. Dieser konkave Abschnitt verhindert das Kippen des zweiten Lagersitzes unter einer großen Last in horizontaler Richtung. Das gewährleistet eine gleichmäßige Krafteinwirkung auf die Linearlager und verringert das Risiko ihres vorzeitigen Ausfalls wirksam.

### Kurzbeschreibung der Zeichnungen

FIG. 1 ist eine schematische Querschnittsansicht und veranschaulicht einen Teilaufbau einer Konvertervorrichtung;
FIG. 2 ist eine schematische Querschnittsansicht und veranschaulicht einen Teilaufbau einer Konvertervorrichtung gemäß der vorliegenden Anmeldung. Hierbei umfasst die Konvertervorrichtung eine Lagersitzanordnung gemäß einer Ausführungsform der vorliegenden Anmeldung.
FIG. 3 ist eine weitere schematische Querschnittsansicht und veranschaulicht die Struktur aus FIG. 2.

### Ausführliche Beschreibung

Im Folgenden werden in Bezug auf die beigefügten Zeichnungen beispielhafte Ausführungsformen der vorliegenden Anmeldung beschrieben. Hierbei sollte beachtet werden, dass diese spezifischen Beschreibungen lediglich dazu dienen, den Fachleuten auf dem Gebiet der Technik zu zeigen, wie die vorliegende Anmeldung umgesetzt werden kann, und dass sie weder als vollständige Aufzählung aller möglichen Arten der vorliegenden Anmeldung noch als Einschränkung des Schutzumfangs der vorliegenden Anmeldung gedacht sind.

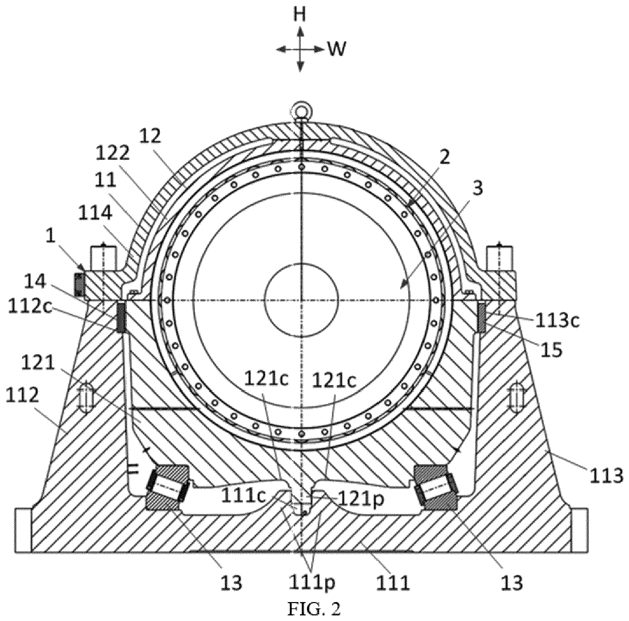

Sofern nicht anders angegeben, bezieht sich "Axialrichtung" in der vorliegenden Anmeldung auf die Axialrichtung einer Lagersitzbohrung eines zweiten Lagersitzes sowie auf die Axialrichtung eines Radiallagers und einer Welle. "Höhenrichtung" bezieht sich auf die Höhenrichtung einer Lagersitz-Anordnung, also auf die Auf- und Ab-Richtung in FIG. 2 (die vertikale Richtung, sofern ein erster Lagersitz in der horizontalen Ebene befestigt ist). Die Höhenrichtung steht senkrecht auf der axialen Richtung. "Breitenrichtung" bezieht sich auf die Breitenrichtung der Lagersitz-Anordnung, also auf die Links-Rechts-Richtung in FIG. 2 (die horizontale Richtung, sofern der erste Lagersitz in der horizontalen Ebene befestigt ist). Die Breitenrichtung ist senkrecht zur Axialrichtung und zur Höhenrichtung.

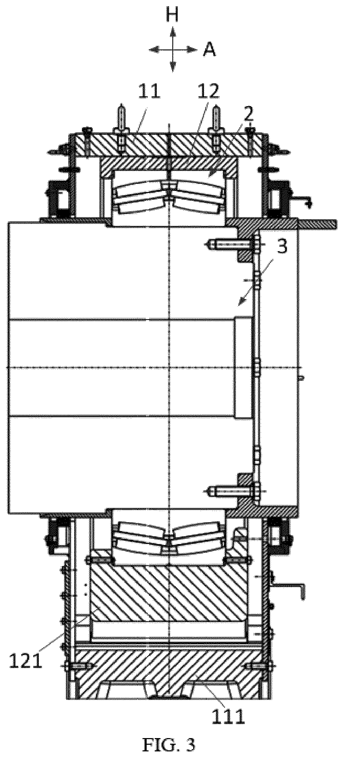

Ein Aufbau einer Lagersitzanordnung ist bezüglich der beigefügten Zeichnungen der Beschreibung gemäß einer Ausführungsform der vorliegenden Erfindung beschrieben. Wie FIG. 2 und 3 zeigen, umfasst eine Konvertervorrichtung gemäß der vorliegenden Anmeldung eine Lagersitzanordnung 1, ein Radiallager 2 und eine Welle 3, gemäß einer Ausführungsform der vorliegenden Anmeldung. Das Radiallager 2 ist in einer Lagersitzbohrung eines zweiten Lagersitzes 12 montiert, der Außenring des Radiallagers 2 ist am zweiten Lagersitz 12 befestigt und die Welle 3 ist in eine Lagerbohrung des Radiallagers 2 eingefügt und am Innenring des Lagers befestigt. Auf diese Weise kann sich die vom Radiallager 2 getragene Welle 3 relativ zur Lagersitzanordnung 1 frei drehen.

Wie FIG. 2 und 3 zeigen, umfasst die Lagersitzanordnung 1 gemäß einer Ausführungsform der vorliegenden Anmeldung einen ersten Lagersitz 11, den zweiten Lagersitz 12 , zwei Linearlager 13, einen ersten Stopper 14 und einen zweiten Stopper 15, die zusammen eingebaut sind.

In dieser Ausführungsform trägt der erste Lagersitz 11 den zweiten Lagersitz 12, die beiden Linearlager 13, den ersten Stopper 14 und den zweiten Stopper 15. Insbesondere umfasst der erste Lagersitz 11 einen ersten unteren Abschnitt 111, einen ersten Seitenwandabschnitt 112, einen zweiten Seitenwandabschnitt 113 und einen ersten Abdeckabschnitt 114.

In Breitenrichtung der Lagersitzanordnung 1 ist der erste untere Abschnitt 111 hinreichend breit. Der erste Seitenwandabschnitt 112 und der zweite Seitenwandabschnitt 113 sind in der Breitenrichtung W in einem bestimmten Abstand voneinander angebracht, um den zweiten Lagersitz 12 zu platzieren. Der erste Seitenwandabschnitt 112 und der zweite Seitenwandabschnitt 113 sind an beiden Endabschnitten des ersten unteren Abschnitts 111 in der Breitenrichtung befestigt (in dieser Ausführungsform sind der erste Seitenwandabschnitt 112 und der zweite Seitenabschnitt gänzlich mit dem ersten unteren Abschnitt 111 geformt). Die Breite des ersten Seitenwandabschnitts 112 nimmt vom oberen zum unteren Endabschnitt hin allmählich zu, und die Breite des zweiten Seitenwandabschnitts 113 nimmt vom oberen zum unteren Endabschnitt hin allmählich zu. Ein Hauptabschnitt des ersten Abdeckabschnitt s 114 weist einen bogenförmigen Querschnitt auf. Der erste Abdeckabschnitt 114 ist mittels Schraubverbindungen abnehmbar am ersten Seitenwandabschnitt 112 und am zweiten Seitenwandabschnitt 113 befestigt. Insbesondere ist ein Endabschnitt des ersten Abdeckabschnitts 114 am oberen Endabschnitt des ersten Seitenwandabschnitts 112 befestigt. Der andere Endabschnitt des ersten Abdeckabschnitts 114 ist am oberen Endabschnitt des zweiten Seitenwandabschnitts 113 befestigt und der erste Abdeckabschnitt 114 wölbt sich in eine Richtung weg vom ersten unteren Abschnitt 111. Auf diese Weise bilden der erste untere Abschnitt 111, der erste Seitenwandabschnitt 112, der zweite Seitenwandabschnitt 113 und der erste Abdeckabschnitt 114 in geschlossener Weise einen Montageraum zur Montage des zweiten Lagersitzes 12 und des Linearlagers 13.

In dieser Ausführungsform befindet sich der zweite Lagersitz 12 zwischen dem ersten Seitenwandabschnitt 112 und dem zweiten Seitenwandabschnitt 113 und ist im Montageraum montiert. Insbesondere umfasst der zweite Lagersitz 12 einen zweiten unteren Abschnitt 121 und einen zweiten Abdeckabschnitt 122.

Der zweite untere Abschnitt 121 und der erste untere Abschnitt 111 liegen einander gegenüber und sind in der Höhenrichtung H voneinander beabstandet. Ein Hauptabschnitt des zweiten Abdeckabschnitts 122 hat einen bogenförmigen Querschnitt, und der obere Abschnitt des zweiten Abdeckabschnitts 122 steht in Kontakt mit dem oberen Abschnitt des ersten Abdeckabschnitts 114. Schraubverbindungen befestigen beide Endabschnitte des zweiten Abdeckabschnitts 122 in Breitenrichtung abnehmbar an beiden Endabschnitten des zweiten unteren Abschnitts 121. Auf diese Weise bilden der zweite Abdeckabschnitt 122 und der zweite untere Abschnitt 121 in geschlossener Weise dazwischen eine Lagersitzbohrung zur Montage des Radiallagers 2.

In dieser Ausführungsform sind die beiden Linearlager 13 im Montageraum montiert und befinden sich zwischen dem ersten unteren Abschnitt 111 und dem zweiten unteren Abschnitt 121. So tragen die Linearlager 13 den zweiten Lagersitz 12 derart, dass der zweite untere Abschnitt 121 relativ zum ersten unteren Abschnitt 111 schwimmt und der zweite Lagersitz 12 eine lineare Bewegung relativ zum ersten Lagersitz 11 ausführen kann. Auf diese Weise erfüllt das vom zweiten Lagersitz 12 getragene Radiallager 2 eine Schwimmfunktion. Die beiden Linearlager 13 tragen beide Endabschnitte des zweiten unteren Abschnitts 121 in Breitenrichtung. Die Art der Linearlager 13 kann je nach Bedarf ausgewählt werden. Darüber hinaus ist die Richtung der vorangehenden linearen Relativbewegung senkrecht zur Breitenrichtung W und stimmt mit der Axialrichtung A überein.

Um die nachteiligen Auswirkungen der Lagersitzanordnung 1 unter großen Belastungen in vertikaler und horizontaler Richtung zu verringern, weist die Lagersitzanordnung 1 der vorliegenden Anmeldung den folgenden Aufbau auf.

Einerseits ist der zweite untere Abschnitt 121 des zweiten Lagersitzes 12 wie folgt geformt: Ein konvexer Abschnitt 121p steht zum ersten unteren Abschnitt hin 111 vor und ist im mittleren Abschnitt des zweiten unteren Abschnitts 121 in Breitenrichtung W ausgebildet. Eine vertiefte Form 121c ist in Richtung vom ersten unteren Abschnitt 111 weg vertieft und in einem Teil des zweiten unteren Abschnitts 121 zwischen dem konvexen Abschnitt 121p und den beiden Endabschnitten in Breitenrichtung ausgebildet. Der Umriss der vertieften Form 121c kann im Querschnitt eine Kurve umfassen. Prüfungen haben nachgewiesen, dass der zweite Lagersitz 12 in dieser speziellen Konfiguration, im Vergleich zum zweiten Lagersitz 102 mit flacher Bodenfläche am unteren Abschnitt, wie in FIG. 1 gezeigt, die vom zweiten unteren Abschnitt 121 des zweiten Lagersitzes 12 getragene Belastung in vertikaler Richtung erheblich verringert (insbesondere im mittleren Abschnitt des zweiten unteren Abschnitts 121 in der Breitenrichtung W). Das verringert die ungünstigen Auswirkungen der Belastung.

Andererseits sind im ersten unteren Abschnitt 111 zwei Schulterabschnitte 111p ausgebildet, die zum zweiten unteren Abschnitt 121 hin vorstehen, und zwischen den beiden Schulterabschnitten 111p ist ein konkaver Abschnitt 111c ausgebildet. Der konkave Abschnitt 111c hat eine Öffnung, die zum konvexen Abschnitt 121p hin offen ist, und der konvexe Abschnitt 121p ist durch die Öffnung in den konkaven Abschnitt 111c eingefügt. Der konvexe Abschnitt 121p ist an der zentralen Position des zweiten unteren Abschnitts 121 in der Breitenrichtung W angeordnet, und entsprechend ist der konkave Abschnitt 111c an der zentralen Position des ersten unteren Abschnitts 111 in der Breitenrichtung W angeordnet. Außerdem gleicht die Breite des konvexen Abschnitts 121p in der Breitenrichtung W ungefähr der Breite des konkaven Abschnitts 111c. Wenn der zweite Lagersitz 12 eine Last von beiden Seiten in Breitenrichtung trägt, ist die Seitenwand des konvexen Abschnitts 121p daher in der Lage, mit der Seitenwand des konkaven Abschnitts 111c in Kontakt zu stehen.

Darüber hinaus ist ein vertiefter erster konkaver Montageabschnitt 112c in der dem zweiten Lagersitz 12 zugewandten Wandfläche des ersten Seitenwandabschnitts 112 ausgebildet, und der erste Stopper 14 kann sich zumindest teilweise im ersten konkaven Montageabschnitt 112c befinden, sodass der erste Stopper 14 zwischen dem zweiten Lagersitz 12 und dem ersten Seitenwandabschnitt 112 eingeklemmt ist. Ein vertiefter zweiter konkaver Montageabschnitt 113c ist in der dem zweiten Lagersitz 12 zugewandten Wandfläche des zweiten Seitenwandabschnitts 113 ausgebildet, und der zweite Stopper 15 kann sich zumindest teilweise im zweiten konkaven Montageabschnitt 113c befinden, sodass der zweite Stopper 15 zwischen dem zweiten Lagersitz 12 und dem zweiten Seitenwandabschnitt 113 eingeklemmt ist. Auf diese Weise verringert die vorstehende Struktur, in welcher der konvexe Abschnitt 121p und der konkave Abschnitt 111c aneinander passen, die Kippgefahr des zweiten Lagersitzes 12 unter Lasten in horizontaler Richtung. Mithilfe von Schraubverbindungen oder dergleichen ist darüber hinaus der erste Stopper 14 abnehmbar am ersten Seitenwandabschnitt 112 befestigt, und der zweite Stopper 15 ist abnehmbar am zweiten Seitenwandabschnitt 113 befestigt. Auf diese Weise lassen sich der erste Stopper 14 und der zweite Stopper 15, sofern sie aufgrund der Relativbewegung des zweiten Lagersitzes 12 relativ zum ersten Lagersitz 11 abgenutzt sind, durch einen neuen ersten Stopper 14 und zweiten Stopper 15 ersetzen. Um außerdem den Verschleiß des ersten Stoppers 14 und des zweiten Stoppers 15 zu verringern, können der erste Stopper 14 und der zweite Stopper 15 aus Metall mit verschleißfesten Eigenschaften hergestellt sein, beispielsweise aus Hochmanganstahl.

Die Konvertervorrichtung gemäß der vorliegenden Anmeldung kann die gleiche oben beschriebene Wirkung erzielen, da sie über die vorstehende Lagersitzanordnung verfügt. Die Konvertervorrichtung kann für Abläufe der Stahlerzeugung in Stahlwerken dienen.

Die vorliegende Anmeldung ist nicht auf die vorstehend genannten Ausführungsformen beschränkt. Fachleute können anhand der Lehren aus der vorliegenden Anmeldung unterschiedliche Modifikationen an den vorangehenden Ausführungsformen vornehmen, ohne vom Schutzumfang der vorliegenden Anmeldung abzuweichen. Darüber hinaus ist auch Folgendes zu beachten:
i. In den vorangehenden Ausführungsformen ist beschrieben, dass der konkave Abschnitt 111c zwischen den beiden Schulterabschnitten 111p des ersten unteren Abschnitts 111 ausgebildet ist, um große nachteilige Auswirkungen auf die strukturelle Festigkeit des ersten unteren Abschnitts 111 zu vermeiden, sofern der konkave Abschnitt 111c gebildet ist. Dennoch ist die vorliegende Anwendung nicht darauf beschränkt; und wenn die strukturelle Festigkeit des ersten unteren Abschnitts 111 ausreicht, ist es nicht erforderlich, die beiden Schulterabschnitte 111p im ersten unteren Abschnitt 111 auszubilden, sondern der konkave Abschnitt 111c wird direkt in der dem zweiten unteren Abschnitt 121 zugewandten Fläche des ersten unteren Abschnitts 111 gebildet.
ii. Es lässt sich verstehen, dass das Radiallager 2 beispielsweise ein zweireihiges Pendelrollenlager sein kann und die Linearlager 13 Wälzlager mit zylindrischen Rollen sein können.
iii. Es lässt sich verstehen, dass ein verändert gestalteter zweiter unterer Abschnitt 121 des zweiten Lagersitzes 12, der mit dem Radiallager 2 montiert ist, die Belastungsverteilung des zweiten Lagersitzes 12 unter Bedingungen der radialen Belastung und Vibration verbessern und das durch Belastungskonzentration verursachte Bruchrisiko verringern kann, sodass sich die Gesamtlebensdauer des Systems verlängert und die Wartungskosten sinken.

Darüber hinaus passt der konvexe Abschnitt 121p des zweiten Lagersitzes 12 zum konkaven Abschnitt 111c des ersten Lagersitzes 11, der nicht nur die lineare Bewegung des zweiten Lagersitzes 12 relativ zum ersten Lagersitz 11 führen, sondern auch verhindern kann, dass der zweite Lagersitz 12 unter einer großen radialen Belastung in horizontaler Richtung kippt. Das gewährleistet gleichmäßig auf die beiden zwischen den Lagersitzen 11 und 12 montierten Linearlager 13 wirkende Kräfte, verringert die Kantenbelastung an den Rollen der Linearlager 13 und lindert die von großen, in horizontaler Richtung wirkenden radialen Lasten im System hervorgerufenen Stöße und Vibrationen. Außerdem sichert es die vom zweiten Lagersitz 12 ausgeführte Schwimmfunktion zusätzlich und verlängert die Lebensdauer des Systems.

Darüber hinaus sind die beiden Stopper 14 und 15 zwischen dem zweiten Lagersitz 12 und dem ersten Lagersitz 11 montiert. Das kann verhindern, dass der zweite Lagersitz 12 unter der großen radialen Belastung in horizontaler Richtung kippt, und vermeidet somit ungleichmäßig auf beide Seiten der Linearlager 13 wirkende Kräfte und erhöht die Lebensdauer der Linearlager 13. Außerdem spielen die beiden Stopper auch eine Rolle bei der Führung der linearen Bewegung des zweiten Lagersitzes 12 relativ zum ersten Lagersitz 11, was Vibrationen verringert und die Lebensdauer des Systems verbessert.

### Liste der bezugsnummern

- 10: Lagersitz-Anordnung;
- 101: Erster Lagersitz;
- 102: Zweiter Lagersitz;
- 103: Linearlager;
- 20: Radiallager;
- 30: Welle;
- 1: Lagersitz-Anordnung;
- 11: Erster Lagersitz;
- 111: Erster unterer Abschnitt;
- 111p: Schulterabschnitt;
- 111c: Konkaver Abschnitt;
- 112: Erster Seitenwandabschnitt;
- 112c: Erster konkaver Montageabschnitt;
- 113: Zweiter Seitenwandabschnitt;
- 113c: Zweiter konkaver Montageabschnitt;
- 114: Erster Abdeckabschnitt;
- 12: Zweiter Lagersitz;
- 121: Zweiter unterer Abschnitt;
- 121p: Konvexer Abschnitt;
- 121c: Vertiefte Form;
- 122: Zweiter Abdeckabschnitt;
- 13: Linearlager;
- 14: Erster Stopper;
- 15: Zweiter Stopper;
- 2: Radiallager;
- 3: Welle;
- H: Höhenrichtung;
- W: Breitenrichtung;
- A: Axiale Richtung.

## Patentansprüche

1. Lagersitz-Anordnung, umfassend:
einen ersten Lagersitz (11), wobei im ersten Lagersitz (11) ein Montageraum ausgebildet ist und der erste Lagersitz (11) einen ersten unteren Abschnitt (111) aufweist;
einen zweiten Lagersitz (12), wobei der zweite Lagersitz (12) im Montageraum montiert ist und einen zweiten unteren Abschnitt (121) aufweist; und
Linearlager (13), wobei die Linearlager (13) im Montageraum montiert sind und sich zwischen dem ersten unteren Abschnitt (111) und dem zweiten unteren Abschnitt (121) befinden, und wobei der zweite Lagersitz (12) von den Linearlagern (13) getragen wird, sodass der zweite untere Abschnitt (121) und der erste untere Abschnitt (111) in der Höhenrichtung (H) der Lagersitzanordnung (1) beabstandet sind und dass der zweite Lagersitz (12) eine lineare Relativbewegung relativ zum ersten Lagersitz (11) ausführen kann,
wobei der zweite untere Abschnitt (121) so geformt ist, dass er die folgende Form aufweist: Ein konvexer Abschnitt (121p) steht in Richtung des ersten unteren Abschnitts (111) vor und ist im mittleren Abschnitt des zweiten unteren Abschnitts (121) in der Breitenrichtung (W) der Lagersitzanordnung (1) ausgebildet, und eine vertiefte Form (121c), die in eine Richtung vom ersten unteren Abschnitt (111) weg vertieft ist, ist in einem Teil des zweiten unteren Abschnitts (121) zwischen dem konvexen Abschnitt (121p) und beiden Endabschnitten des zweiten unteren Abschnitts (121) in der Breitenrichtung (W) ausgebildet; und
gegenüber vom konvexen Abschnitt (121p) ist im ersten unteren Abschnitt (111) ein konkaver Abschnitt (111c) ausgebildet, wobei der konkave Abschnitt (111c) eine Öffnung aufweist, die zum konvexen Abschnitt (121p) hin offen ist, und der konvexe Abschnitt (121p) ist durch die Öffnung in den konkaven Abschnitt (111c) eingefügt.

2. Lagersitzanordnung nach Anspruch 1, wobei der Umriss der vertieften Form (121c) im Querschnitt des zweiten Lagersitzes (12) eine Kurve umfasst.

3. Lagersitzanordnung nach Anspruch 1 oder 2, wobei zwei Schulterabschnitte (111p) in Richtung zum zweiten unteren Abschnitt (121) hin vorstehen und im ersten unteren Abschnitt (111) ausgebildet sind und der konkave Abschnitt (111c) zwischen den beiden Schulterabschnitten (111p) ausgebildet ist.

4. Lagersitzanordnung nach einem der Ansprüche 1 bis 3, wobei zwei Linearlager (13) an beiden Seiten des konvexen Abschnitts (121p) in der Breitenrichtung angeordnet sind, um beide Endabschnitte des zweiten unteren Abschnitts (121) in der Breitenrichtung zu tragen.

5. Lagersitzanordnung nach einem der Ansprüche 1 bis 4, wobei der erste Lagersitz (11) einen ersten Seitenwandabschnitt (112) und einen zweiten Seitenwandabschnitt (113) umfasst, wobei der erste Seitenwandabschnitt (112) und der zweite Seitenwandabschnitt (113) am ersten unteren Abschnitt (111) befestigt und in der Breitenrichtung (W) beabstandet sind, und wobei der zweite Lagersitz (12) zwischen dem ersten Seitenwandabschnitt (112) und dem zweiten Seitenwandabschnitt (113) angeordnet ist; und
außerdem umfasst die Lagersitzanordnung (1) einen ersten Stopper (14) und einen zweiten Stopper (15), wobei der erste Stopper (14) zwischen dem zweiten Lagersitz (12) und dem ersten Seitenwandabschnitt (112) eingeklemmt ist, und wobei der zweite Stopper (15) zwischen dem zweiten Lagersitz (12) und dem zweiten Seitenwandabschnitt (113) eingeklemmt ist.

6. Lagersitzanordnung nach Anspruch 5, wobei der erste Stopper (14) abnehmbar am ersten Seitenwandabschnitt (112) befestigt ist und der zweite Stopper (15) abnehmbar am zweiten Seitenwandabschnitt (113) befestigt ist.

7. Lagersitzanordnung nach Anspruch 5 oder 6, wobei ein erster konkaver Montageabschnitt (112c) im ersten Seitenwandabschnitt (112) ausgebildet ist, der erste Stopper (14) sich zumindest teilweise im ersten konkaven Montageabschnitt (112c) befindet, ein zweiter konkaver Montageabschnitt (113c) im zweiten Seitenwandabschnitt (113) ausgebildet ist und der zweite Stopper (15) sich zumindest teilweise im zweiten konkaven Montageabschnitt (113c) befindet.

8. Lagersitzanordnung nach einem der Ansprüche 5 bis 7, wobei der erste Lagersitz (11) außerdem einen ersten Abdeckabschnitt (114) umfasst, der erste Abdeckabschnitt (114) abnehmbar am ersten Seitenwandabschnitt (112) und am zweiten Seitenwandabschnitt (113) befestigt ist, und wobei der erste Abdeckabschnitt (114), der erste untere Abschnitt (111), der erste Seitenwandabschnitt (112) und der zweite Seitenwandabschnitt (113) den Montageraum in geschlossener Weise bilden.

9. Lagersitzanordnung nach einem der Ansprüche 1 bis 8, wobei der zweite Lagersitz (12) außerdem einen zweiten Abdeckabschnitt (122) umfasst, der zweite Abdeckabschnitt (122) am zweiten unteren Abschnitt (121) befestigt ist, und wobei der zweite Abdeckabschnitt (122) und der zweite untere Abschnitt (121) in geschlossener Weise dazwischen eine Lagersitzbohrung zur Montage eines Radiallagers (2) bilden.

10. Konvertervorrichtung, umfassend ein Radiallager (2), eine Welle (3) und die Lagersitzanordnung (1) nach einem der Ansprüche 1 bis 9, wobei das Radiallager (2) im zweiten Lagersitz montiert ist (12), der Außenring des Radiallagers (2) am zweiten Lagersitz (12) befestigt ist und die Welle (3) in eine Lagerbohrung des Radiallagers (2) eingefügt und am Innenring des Radiallagers (2) befestigt ist.

## Claims

1. A bearing seat assembly, comprising:
a first bearing seat (11), wherein a mounting space is formed in the first bearing seat (11) and the first bearing seat (11) has a first lower portion (111);
a second bearing seat (12), the second bearing seat (12) being mounted in the mounting space and having a second lower portion (121); and
linear bearings (13), the linear bearings (13) being mounted in the mounting space and being located between the first lower portion (111) and the second lower portion (121), and the second bearing seat (12) being supported by the linear bearings (13) such that the second lower portion (121) and the first lower portion (111) are spaced apart in the vertical direction (H) of the bearing seat assembly (1) and that the second bearing seat (12) can perform a linear relative movement relative to the first bearing seat (11),
the second lower portion (121) being shaped such that it has the following shape: a convex portion (121p) projects in the direction of the first lower portion (111) and is formed in the central portion of the second lower portion (121) in the width direction (W) of the bearing seat assembly (1), and a recessed shape (121c), which is recessed in a direction away from the first lower portion (111), is formed in a part of the second lower portion (121) between the convex portion (121p) and the two end portions of the second lower portion (121) in the width direction (W); and
a concave portion (111c) is formed opposite the convex portion (121p) in the first lower portion (111), the concave portion (111c) having an opening that is open towards the convex portion (121p), and the convex portion (121p) being inserted through the opening into the concave portion (111c).

2. The bearing seat assembly according to claim 1, wherein the outline of the recessed shape (121c) in the cross section of the second bearing seat (12) comprises a curve.

3. The bearing seat assembly according to claim 1 or 2, wherein two shoulder portions (111p) project towards the second lower portion (121) and are formed in the first lower portion (111) and the concave portion (111c) is formed between the two shoulder portions (111p).

4. The bearing seat assembly according to any one of claims 1 to 3, wherein two linear bearings (13) are arranged on the two sides of the convex portion (121p) in the width direction to support the two end portions of the second lower portion (121) in the width direction.

5. The bearing seat assembly according to any one of claims 1 to 4, wherein the first bearing seat (11) comprises a first side wall portion (112) and a second side wall portion (113), the first side wall portion (112) and the second side wall portion (113) being attached to the first lower portion (111) and spaced apart in the width direction (W), and the second bearing seat (12) being arranged between the first side wall portion (112) and the second side wall portion (113); and
the bearing seat assembly (1) further comprises a first stopper (14) and a second stopper (15), the first stopper (14) being clamped between the second bearing seat (12) and the first side wall portion (112), and the second stopper (15) being clamped between the second bearing seat (12) and the second side wall portion (113).

6. The bearing seat assembly according to claim 5, wherein the first stopper (14) is detachably attached to the first side wall portion (112) and the second stopper (15) is detachably attached to the second side wall portion (113).

7. The bearing seat assembly according to claim 5 or 6, wherein a first concave mounting portion (112c) is formed in the first side wall portion (112), the first stopper (14) is located at least partially in the first concave mounting portion (112c), a second concave mounting portion (113c) is formed in the second side wall portion (113) and the second stopper (15) is located at least partially in the second concave mounting portion (113c).

8. The bearing seat assembly according to any one of claims 5 to 7, wherein the first bearing seat (11) further comprises a first cover portion (114), the first cover portion (114) being detachably attached to the first side wall portion (112) and to the second side wall portion (113), and wherein the first cover portion (114), the first lower portion (111), the first side wall portion (112) and the second side wall portion (113) form the mounting space in a closed manner.

9. The bearing seat assembly according to any one of claims 1 to 8, wherein the second bearing seat (12) further comprises a second cover portion (122), the second cover portion (122) being attached to the second lower portion (121), and wherein the second cover portion (122) and the second lower portion (121) form a bearing seat bore for mounting a radial bearing (2) in a closed manner therebetween.

10. A converter device comprising a radial bearing (2), a shaft (3) and the bearing seat assembly (1) according to any one of claims 1 to 9, wherein the radial bearing (2) is mounted in the second bearing seat (12), the outer ring of the radial bearing (2) is attached to the second bearing seat (12) and the shaft (3) is inserted into a bearing bore of the radial bearing (2) and is attached to the inner ring of the radial bearing (2).

## Revendications

1. Ensemble de siège de palier, comprenant :
un premier siège de palier (11), dans lequel un espace de montage est réalisé dans le premier siège de palier (11) et le premier siège de palier (11) présente une première section inférieure (111) ;
un second siège de palier (12), dans lequel le second siège de palier (12) est monté dans l'espace de montage et présente une seconde section inférieure (121) ; et
des paliers linéaires (13), dans lequel les paliers linéaires (13) sont montés dans l'espace de montage et sont situés entre la première section inférieure (111) et la seconde section inférieure (121), et dans lequel le second siège de palier (12) est porté par les paliers linéaires (13) de telle sorte que la seconde section inférieure (121) et la première section inférieure (111) soient espacées dans le sens de la hauteur (H) de l'ensemble de siège de palier (1) et que le second siège de palier (12) peut effectuer un mouvement relatif linéaire par rapport au premier siège de palier (11),
dans lequel la seconde section inférieure (121) est formée de telle sorte qu'elle présente la forme suivante : une section convexe (121p) fait saillie dans la direction de la première section inférieure (111) et est réalisée dans la section médiane de la seconde section inférieure (121) dans le sens de la largeur (W) de l'ensemble de siège de palier (1), et une forme en retrait (121c), qui est en retrait dans une direction s'éloignant de la première section inférieure (111), est réalisée dans une partie de la seconde section inférieure (121) entre la section convexe (121p) et les deux sections d'extrémité de la seconde section inférieure (121) dans le sens de la largeur (W) ; et
en face de la section convexe (121p) dans la première section inférieure (111) une section concave (111c) est réalisée, la section concave (111c) présentant une ouverture qui est ouverte sur la section convexe (121p), et la section convexe (121p) est insérée à travers l'ouverture dans la section concave (111c).

2. Ensemble de siège de palier selon la revendication 1, dans lequel le contour de la forme en retrait (121c) dans la section transversale du second siège de palier (12) comprend une courbe.

3. Ensemble de siège de palier selon la revendication 1 ou 2, dans lequel deux sections d'épaulement (111p) font saillie vers la seconde section inférieure (121) et sont réalisées dans la première section inférieure (111) et la section concave (111c) est réalisée entre les deux sections d'épaulement (111p).

4. Ensemble de siège de palier selon l'une des revendications 1 à 3, dans lequel deux paliers linéaires (13) sont agencés de chaque côté de la section convexe (121p) dans le sens de la largeur pour porter les deux sections d'extrémité de la seconde section inférieure (121) dans le sens de la largeur.

5. Ensemble de siège de palier selon l'une des revendications 1 à 4, dans lequel le premier palier (11) comprend une première section de paroi latérale (112) et une seconde section de paroi latérale (113), dans lequel la première section de paroi latérale (112) et la seconde section de paroi latérale (113) sont fixées à la première section inférieure (111) et espacées dans le sens de la largeur (W), et dans lequel le second palier (12) est agencé entre la première section de paroi latérale (112) et la seconde section de paroi latérale (113) ; et
en outre, l'ensemble de siège de palier (1) comprend une première butée (14) et une seconde butée (15), dans lequel la première butée (14) est serrée entre le second siège de palier (12) et la première section de paroi latérale (112), et dans lequel la seconde butée (15) est serrée entre le second siège de palier (12) et la seconde section de paroi latérale (113).

6. Ensemble de siège de palier selon la revendication 5, dans lequel la première butée (14) est fixée de manière amovible à la première section de paroi latérale (112) et la seconde butée (15) est fixée de manière amovible à la seconde section de paroi latérale (113).

7. Ensemble de siège de palier selon la revendication 5 ou 6, dans lequel une première section de montage concave (112c) est réalisée dans la première section de paroi latérale (112), la première butée (14) est située au moins partiellement dans la première section de montage concave (112c), une seconde section de montage concave (113c) est réalisée dans la seconde section de paroi latérale (113) et la seconde butée (15) est située au moins partiellement dans la seconde section de montage concave (113c).

8. Ensemble de siège de palier selon l'une des revendications 5 à 7, dans lequel le premier siège de palier (11) comprend en outre une première section de recouvrement (114), la première section de recouvrement (114) est fixée de manière amovible à la première section de paroi latérale (112) et à la seconde section de paroi latérale (113), et dans lequel la première section de recouvrement (114), la première section inférieure (111), la première section de paroi latérale (112) et la seconde section de paroi latérale (113) construisent l'espace de montage de manière fermée.

9. Ensemble de siège de palier selon l'une des revendications 1 à 8, dans lequel le second siège de palier (12) comprend en outre une seconde section de recouvrement (122), la seconde section de recouvrement (122) est fixée à la seconde section inférieure (121), et dans lequel la seconde section de recouvrement (122) et la seconde section inférieure (121) construisent un alésage de siège de palier pour le montage d'un palier radial (2) de manière fermée entre elles.

10. Dispositif convertisseur comprenant un palier radial (2), un arbre (3) et l'ensemble de siège de palier (1) selon l'une des revendications 1 à 9, dans lequel le palier radial (2) est monté dans le second siège de palier (12), la bague extérieure du palier radial (2) est fixée au second siège de palier (12) et l'arbre (3) est inséré dans un alésage de palier du palier radial (2) et est fixé à la bague intérieure du palier radial (2).
